# EUROPÄISCHE PATENTSCHRIFT

(11) **EP 1 252 854 B1**
(45) Veröffentlichungstag und Bekanntmachung des Hinweises auf die Patenterteilung: **08.11.2006**
(21) Anmeldenummer: 02008589.0
(22) Anmeldetag: 16.04.2002
(51) Int. Cl.: A47L 9/24

(54) **Rohrverbindung für ein Saugrohr eines Staubsaugers**
Tube connector for the suction tube of a vacuum cleaner
Raccord de tuyaux pour tuyau d' aspirateur

(30) Priorität: 27.04.2001 DE 10120688
(43) Veröffentlichungstag der Anmeldung: 30.10.2002
(73) Patentinhaber: BSH Bosch und Siemens Hausgeräte GmbH, 81739 München (DE)
(72) Erfinder: Albert, Wilma, 97618 Wülfershausen (DE); Jessenberger, Martin, 97638 Eussenhausen (DE); Kess, Herbert, 97616 Bad Neustadt (DE); Schlereth, Andreas, 97616 Bad Neustadt (DE); Seith, Thomas, 97616 Bad Neustadt (DE)

(56) Entgegenhaltungen:
- EP-A- 1 031 312
- DE-A- 19 857 456
- DE-U- 29 619 422
- GB-A- 625 022
- PATENT ABSTRACTS OF JAPAN vol. 1996, no. 11, 29. November 1996 (1996-11-29) -& JP 08 191785 A (HITACHI LTD), 30. Juli 1996 (1996-07-30)

## Beschreibung

Die Erfindung bezieht sich auf eine Rohrverbindung für ein Saugrohr eines Staubsaugers mit einem Rohrstück und einem Rohranschlußstück, das einseitig auf das Rohrstück aufschiebbar ist.

Bekannte Rohrverbindungen für Saugrohre von Staubsaugern verwenden in der Regel eine Teile aufwendige mechanische Verrastung, beispielsweise eine Bajonettverriegelung. Aus der DE 296 19 422 U1 ist ein teleskopierbares Saugrohr für Staubsauger bekannt, das aus zwei ineinander verschiebbaren Rohren besteht. Das Innenrohr weist mehrere in Achsrichtung voneinander beabstandete Rasteintiefungen auf, die zum Arretieren des Innenrohrs mit dem Außenrohr unter Betätigung eines einem Außenrohr angeordneten Handhabungselements ein Rastelement lösbar eingerastet wird. Dabei ist das Handhabungselement am Außenrohr gegen die Wirkung einer Rückstellkraft hebelartig schwenkbar angeordnet, so dass das an dem Handhabungselement angeordnete Rastelement bei Betätigung des Handhabungselements ist das Rastelement reversibel zwischen einer Rast- und einer Lösestellung bewegbar.

Es ist die Aufgabe der Erfindung, eine einfache mechanische Verhaftung zu schaffen, mit der eine Rohrverbindung zwischen zwei Rohrstücken hergestellt wird.

Diese Aufgabe wird erfindungsgemäß gelöst durch eine Rohrverbindung für ein Saugrohr eines Staubsaugers mit einem Rohrstück und einem Rohranschlußstück, das einseitig auf das Rohrstück aufschiebbar ist, das mindestens einer Rasteintiefung aufweist, wobei zum Arretieren des Rohranschlußstücks an dem Rohrstück eine das Rohranschlußstück umgebende Rasthülse angeordnet ist, die zwischen einer Rast- und einer Lösestellung schwenkbar angeordnet ist, wobei die Rasthülse einen ersten, an das Rohranschlußstück anlegbaren und einen mit der mindestens einen Rastvertiefung zusammenwirkenden Rastvorsprung tragenden Abschnitt und einen zweiten, zum Schwenken betätigbaren Abschnitt aufweist, wobei der erste Abschnitt gegen eine rücktreibende Federkraft aus der Verrastungsstellung herausschwenkbar ist, wobei die Rasthülse das Rohranschlussstück ringförmig ganz umschließt.

Erfindungsgemäß wird die Verrastung der beiden Rohrstücke, d.h. des Rohrstücks und des Rohranschlußstücks, durch ein einziges Element, nämlich die Rasthülse, gewährleistet. Der Aufbau der Rasthülse ist sehr eng an dem Rohrkörper anliegend und läßt sich leicht durch eine einzige Bewegung betätigen. Dadurch, dass die Rasthülse das Rohranschlußstück ganz umschließt, wird auch eine ausreichende mechanische Stabilität erreicht. Die Rasthülse ist unverlierbar mit dem Rohranschlußstück verbunden. Zudem wird durch die Rasthülse nur ein geringer Bauraum benötigt, um eine feste Verbindung zwischen den beiden Rohrstücken zu schaffen. Das innere Rohrstück kann auch als Teleskoprohr ausgebildet sein.

Weitere Vorteile sind den Weiterbildungen unserer Beschreibung zu entnehmen.

Besonders geeignet ist eine Rohrverbindung, bei der die zurücktreibende Federkraft durch elastische Verformung entweder des ersten oder des zweiten Abschnitts der Rasthülse gebildet wird. Auch beide Abschnitte können elastisch verformbar sein.

Ebenso ist vorteilhaft, wenn der erste Abschnitt im nicht betätigten Zustand auf seiner dem Rohranschlußstück zugewandten Innenseite wenigstens indem dem Rastvorsprung auf der anderen Seite des Rohrstücks gegenüberliegenden Bereich konisch von dem Rohranschlußstück abgewinkelt ist. Dadurch läßt sich bei Betätigung des zweiten Abschnitts der erste Abschnitt in den Bereich, in dem der Rastvorsprung angeordnet ist, leicht von dem äußeren Rohranschlußstück wegdrücken, um die Rasteintiefung freizugeben.

Ebenso ist es besonders geeignet, wenn der zweite Abschnitt auf seiner dem Rohranschlußstück zugewandten Innenseite wenigstens in dem Bereich, indem er an dem das den Rastvorsprung tragenden Bereich des zweiten Abschnitts angrenzt, konisch von dem Rohranschlußstück abgewinkelt ist, so dass sich der zweite Abschnitt leicht durch Handbetätigung gegen das äußere Rohranschlußstück herabdrücken läßt, um so den den Rastvorsprung tragenden Bereich des ersten Abschnitts nach oben zu bewegen.

Um zu verhindern, dass sich die Rasthülse gegenüber dem Rohranschlußstück in axialer oder Umfangsrichtung bewegen läßt, ist die Rasthülse entsprechend mit dem Rohranschlußstück ortsfest verbunden. Hierzu ist insbesondere eine Rasteintiefung geeignet, die sich nur über einen Abschnitt des Umfangs des Rohrstücks erstreckt und im wesentlichen dieselbe Breite wie der Rastvorsprung an der Rasthülse aufweist, der durch das Rohranschlußstück hindurch greift.

Bevorzugt weist die Rasthülse zur Erhöhung der Rückstellkraft ein bei Betätigung des zweiten Abschnitts betätigtes elastisches Element auf, das vorzugsweise als Feder- oder Gummielement ausgebildet ist.

Das elastische Element ist nach einer bevorzugten Ausführungsform am Rohranschlußstück im Bereich des zweiten Abschnitts oder am zweiten Abschnitt selbst zum Rohranschluß weisend angeordnet.

Das Rohrstück läßt sich sowohl als Teleskoprohr oder als Handgriff ausbilden. Wenn es als Teleskoprohr vorgesehen ist, hat es eine Vielzahl von Rasteintiefungen, mit denen der Rastvorsprung, der an der Rasthülse angeordnet ist, zusammenwirkt.

Um die Elastizität der Rasthülse zu erhöhen, hat diese in einer bevorzugten Ausführungsform sich in axialer Richtung zu dem Rohrstück und dem Rohranschlußstück erstreckende Ausnehmungen, die bevorzugt sowohl von der Rohrkante des ersten Abschnitts als auch von der Rohrkante des zweiten Abschnitts der Rasthülse ausgehend.

Nachstehend wird die Erfindung in einem Ausführungsbeispiel anhand der Zeichnungen näher erläutert. Es zeigen:
- Fig. 1: eine Rasthülse in perspektivischer Ansicht,
- Fig. 2: ein Rohranschlußstück zur Aufnahme der Rasthülse,
- Fig. 3: ein Rohrstück, das Rohranschlußstück und die Rasthülse im Längsschnitt entlang einer Schnittlinie A - A, und
- Fig. 4: das Rohrstück, das Rohranschlußstück und die Rasthülse gemäß Fig. 3 im Querschnitt entlang einer Schnittlinie B - B

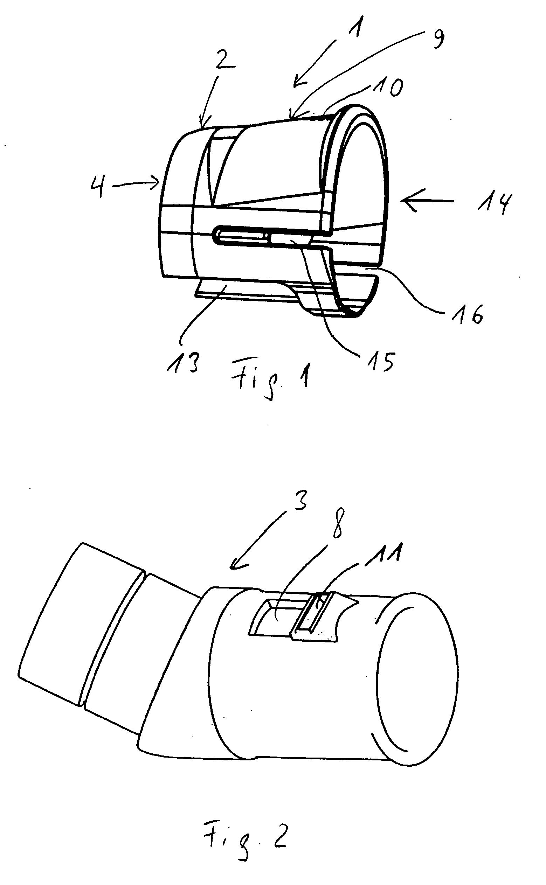

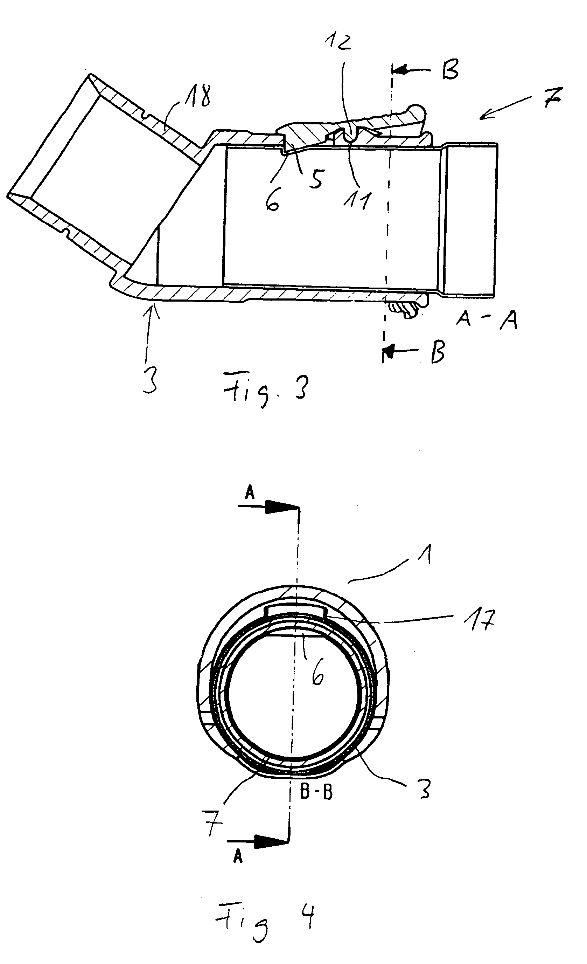

Eine Rohrverbindung für ein Saugrohr eines Staubsaugers weist eine Rasthülse 1 (Fig. 1) auf. Die Rasthülse 1 hat einen ersten Abschnitt 2, der auf der äußeren Mantelfläche eines Rohranschlußstücks (Fig. 2) aufliegt. Die innere Mantelwand im Bereich des ersten Abschnitts 3 ist daher wenigstens im wesentlichen zylindrisch ausgebildet. Die äußere Mantelwand des Abschnitts 2 ist vorzugsweise gegen die Stirnseite 4 der Rasthülse leicht abgeschrägt. Auf seiner inneren Mantelwand trägt der Abschnitt 2 einen Rastvorsprung 5 (Fig. 3), der mit einer entsprechenden Rastvertiefung 6 in einem Rohrstück 7 zusammenwirkt. Damit der Rastvorsprung 5 durch das Rohranschlußstück 3 hindurch treten kann, weist dieses eine Ausnehmung 8 auf, durch die der Rastvorsprung 5 hindurch greift.

Die Rasthülse 1 weist einen zweiten Abschnitt 9 auf, der zum Schwenken der Rasthülse 1 über eine Grifffläche im Bereich des Abschnitts 9 läßt sich die Rasthülse 1 über die Grifffläche 10 nach hinten gegen die äußere Mantelwand des Rohranschlußstücks 3 herunterdrücken, wodurch der erste Abschnitt 2 in dem der Grifffläche 10 gegenüberliegenden Bereich nach oben gedrückt wird.

Dabei bilden die Abschnitte 2 und 9 im oberen Bereich einen zweiarmigen Hebel aus, der durch ein in einer als Lagerung dienenden Nut 11 (Fig. 2) gelagerten Vorsprung 12 Träger ist. Auf der dem Rastvorsprung 5 gegenüberliegenden Seite weist der Abschnitt 2 entweder eine konisch von dem Rohranschlußstück 3 abstehende Form auf, so dass die Hebelbewegung ermöglicht wird, oder es ist in Abschnitt 2 eine Ausnehmung 13 vorhanden, die im wesentlichen U-förmig ausgebildet ist und sich ausgehend von der Stirnfläche 4 in Richtung zu der gegenüberliegenden Stirnfläche erstreckt. Aufgrund der Ausnehmung 13 ist eine elastische Verformung der Rasthülse 1 im Bereich des Abschnitts 2 dort möglich, wo dieser durch seine Mantelwand, von oben her betrachtet, um mehr als den halben Rohrumfang umgreift. Durch die elastische Verformung entsteht gleichzeitig eine rücktreibende Kraft, durch die beim Loslassen der Grifffläche 10 der Abschnitt 2 wieder in seine ursprüngliche Form zurückschnellt, so dass er das Rohranschlußstück 3 umgreift. Wenn jedoch die Grifffläche 10 auf das Rohranschlußstück 3 heruntergedrückt gehalten wird, ist der Rastvorsprung 5 außer Eingriff mit dem Rohrstück 7, d.h. mit der Rastvertiefung 6, so dass das Rohrstück 7 aus dem Rohranschlußstück 3 herausgezogen werden kann.

Zur weiteren Unterstützung der Elastizität der Rasthülse 1 sind zusätzlich zu der Ausnehmung 13 schmale, ebenfalls U-förmige Ausnehmungen 15, 16 von der Stirnseite 14 aus vorhanden.

Anstelle der einzigen Rastvertiefung 6 in dem Rohrstück 7 kann auch eine Mehrzahl von Rastvertiefungen vorhanden, die dann hintereinander angeordnet sind. Sie erlauben dann ein Verbinden des Rohranschlußstücks 3 an verschiedenen Positionen des Rohrstücks 7.

Fig. 4 zeigt die Rasthülse 1 im Querschnitt, wobei sichtbar wird, wie die Rasthülse 1 das Rohranschlußstück 3 seitlich umgreift. Die Rasthülse 1 ist einer die Nut 11 aufnehmenden Nase 17 auf dem Rohranschlußstück 3 schwenkbar gelagert.

Das Rohranschlußstück weist einen Stutzen 18 (Fig. 3) auf, mit dem es beispielsweise mit einem Schlauch verbunden ist.

Durch die Erfindung wird eine einfache Verbindung zwischen einem Rohrstück 7 und einem Rohranschlußstück 3 geschaffen, die über eine schwenkbar auf dem Rohranschlußstück 3 in der Nase 17 gelagerte Rasthülse 1 miteinander lösbar und verbindbar sind.

## Patentansprüche

1. Rohrverbindung für ein Saugrohr eines Staubsaugers mit einem Rohrstück (7) und einem Rohranschlussstück (3), das einseitig auf das Rohrstück (7) aufschiebbar ist, das mindestens eine Rasteintiefung (6) aufweist, wobei zum Arretieren des Rohranschlussstücks (3) an dem Rohrstück (7) eine das Rohranschlussstück (3) umgebende Rasthülse (1) angeordnet ist, die zwischen einer Rast- und einer Lösestellung schwenkbar angeordnet ist, wobei die Rasthülse (1) einen ersten, an das Rohranschlussstück (3) anlegbaren und einen mit der mindestens einen Rastvertiefung (6) zusammenwirkenden Rastvorsprung tragenden Abschnitt (2) und einen zweiten, zum Schwenken betätigbaren Abschnitt (9) aufweist, wobei der erste Abschnitt (2) gegen eine rücktreibende Federkraft aus der Verrastungsstellung herausschwenkbar ist, **dadurch gekennzeichnet, dass** die Rasthülse (1) das Rohranschlussstück (3) ringförmig ganz umschließt.

2. Rohrverbindung nach Anspruch 1, **dadurch gekennzeichnet, dass** die rücktreibende Federkraft durch elastische Verformung entweder des ersten (2) und/oder des zweiten Abschnitts (9) der Rasthülse (1) gebildet ist.

3. Rohrverbindung nach Anspruch 1 oder 2, **dadurch gekennzeichnet, dass** der erste Abschnitt (2) im nicht betätigten Zustand auf seiner dem Rohranschlussstück (3) zugewandten Innenseite wenigstens in dem dem Rastvorsprung auf der anderen Seite des Rohrstücks (7) gegenüberliegenden Bereich konisch von dem Rohranschlussstück (3) abgewinkelt ist.

4. Rohrverbindung nach einem der Ansprüche 1 bis 3, **dadurch gekennzeichnet, dass** der zweite Abschnitt (9) auf seiner dem Rohranschlussstück (3) zugewandten Innenseite wenigstens in dem sich an den Rastvorsprung (5) anschließenden Bereich konisch von dem Rohranschlussstück (3) abgewinkelt ist.

5. Rohrverbindung nach einem der Ansprüche 1 bis 4, **dadurch gekennzeichnet, dass** Mittel zum axialen und/oder verdrehsicheren Festlegen der Rasthülse (1) bezüglich des Rohranschlussstückes (3) vorgesehen sind.

6. Rohrverbindung nach Anspruch 5, **dadurch gekennzeichnet, dass** die Rasteintiefung (6) sich nur über einen Abschnitt des Umfangs des Rohrstücks (7) erstreckt und im wesentlichen dieselbe Breite wie der Rastvorsprung (5) an der Rasthülse (1) aufweist, der durch das Rohranschlussstück (3) hindurchgreift.

7. Rohrverbindung nach einem der Ansprüche 1 bis 6, **dadurch gekennzeichnet, dass** zur Erhöhung der Rückstellkraft ein bei Betätigung des zweiten Abschnitts (9) betätigtes elastisches Element, vorzugsweise ein Feder- oder Gummielement, vorgesehen ist.

8. Rohrverbindung nach Anspruch 7, **dadurch gekennzeichnet, dass** das elastische Element am Rohranschlussstück (3) im Bereich des zweiten Abschnitts (9) oder am zweiten Abschnitt (9) selbst zum Rohranschlussstück (3) weisend angeordnet ist.

9. Rohrverbindung nach einem der Ansprüche 1 bis 8, **dadurch gekennzeichnet, dass** das Rohrstück (7) als Teleskoprohr oder als Handgriff ausgebildet ist.

10. Rohrverbindung nach einem der Ansprüche 1 bis 9, **dadurch gekennzeichnet, dass** die Rasthülse (1) sich in axialer Richtung erstreckende Ausnehmungen aufweist.

11. Rohrverbindung nach Anspruch 10, **dadurch gekennzeichnet, dass** die Ausnehmungen sowohl von der Rohrkante des ersten Abschnitts (2) als auch von der Rohrkante des zweiten Abschnitts (9) der Rasthülse (1) ausgehen.

## Claims

1. Pipe connection for a suction pipe of a vacuum cleaner with a pipe piece (7) and a pipe connecting member (3), which can be pushed at one end onto the pipe piece (7), which has at least one detent depression (6), wherein for locking the pipe connecting member (3) to the pipe piece (7) there is arranged a detent sleeve (1) which surrounds the pipe connecting member (3) and which is arranged to be pivotable between a detent setting and a release setting, wherein the detent sleeve (1) has a first section (2), which can be placed against the pipe connecting member (3) and carries a detent projection co-operating with the at least one detent depression (6), and a second section (9) actuable for the pivoting, wherein the first section (2) is pivotable out of the detent setting against a restoring spring force, **characterised in that** the detent sleeve (1) completely annularly surrounds the pipe connecting member (3).

2. Pipe connection according to claim 1, **characterised in that** the restoring spring force is formed by resilient deformation of the first section (2) and/or the second section (9) of the detent sleeve (1).

3. Pipe connection according to claim 1 or 2, **characterised in that** the first section (2) in the non-actuated state is angled conically away from the pipe connecting member (3) on its inner side, which faces the pipe connecting member (3), at least in the region opposite the detent projection on the other side of the pipe piece (7).

4. Pipe connection according to one of claims 1 to 3, **characterised in that** the second section (9) is conically angled away from the pipe connecting member (3) on its inner side, which faces the pipe connecting member (3), at least in the region adjoining the detent projection (5).

5. Pipe connection according to one of claims 1 to 4, **characterised in that** means for axial and/or rotationally secure fixing of the detent sleeve (1) with respect to the pipe connecting member (3) are provided.

6. Pipe connection according to claim 5, **characterised in that** the detent depression (6) extends only over a section of the circumference of the pipe member (7)

7. Raccordement de tuyaux selon l'une des revendications 1 à 6, **caractérisé en ce qu'**est prévu, pour augmenter la force de rappel, un élément élastique, de préférence un élément ressort ou en caoutchouc, actionné lors de l'actionnement de la deuxième section (9).

8. Raccordement de tuyaux selon la revendication 7, **caractérisé en ce que** l'élément élastique est situé sur le raccord de tuyau (3) dans la zone de la deuxième section (9) ou sur la deuxième section (9) elle-même de manière orientée vers le raccord de tuyau (3).

9. Raccordement de tuyaux selon l'une des revendications 1 à 8, **caractérisé en ce que** le bout de tuyau (7) est réalisé en tant que tuyau téléscopique ou en tant que poignée.

10. Raccordement de tuyaux selon l'une des revendications 1 à 9, **caractérisé en ce que** le manchon d'arrêt (1) comporte des évidements qui s'étendent dans le sens axial.

11. Raccordement de tuyaux selon la revendication 10, **caractérisé en ce que** les évidements partent non seulement du bord du tuyau de la première section (2), mais aussi du bord du tuyau de la deuxième section (9) du manchon d'arrêt (1).

## Revendications

1. Raccordement de tuyaux pour un tuyau aspirant d'un aspirateur avec un bout de tuyau (7) et un raccord de tuyau (3) qui peut être glissé d'un côté sur le bout de tuyau (7) qui comporte au moins un cran d'arrêt (6), un manchon d'arrêt (1), qui entoure le raccord de tuyau (3) et est disposé de manière à pouvoir pivoter entre une position d'enclenchement et une position débloquée, étant disposé pour bloquer le raccord de tuyau (3) sur le bout de tuyau (7), le manchon d'arrêt (1) comportant une première section (2) qui peut être appliquée sur le raccord de tuyau (3) et porte une saillie d'arrêt qui coopère avec l'au moins un cran d'arrêt (6) et une deuxième section (9) qui peut être actionnée pour pivoter, la première section (2) pouvant subir un pivotement pour quitter la position d'enclenchement à l'encontre d'une force élastique de rappel, **caractérisé en ce que** le manchon d'arrêt (1) entoure entièrement annulairement le raccord de tuyau (3).

2. Raccordement de tuyaux selon la revendication 1, **caractérisé en ce que** la force élastique de rappel est constituée par déformation élastique de la première (2) et/ou de la deuxième section (9) du manchon d'arrêt (1).

3. Raccordement de tuyaux selon la revendication 1 ou 2, **caractérisé en ce que** la première section (2), à l'état non actionné, est pliée coniquement par rapport au raccord de tuyau (3) sur son côté intérieur tourné vers le raccord de tuyau (3) au moins dans la zone opposée à la saillie d'arrêt de l'autre côté du bout de tuyau (7).

4. Raccordement de tuyaux selon l'une des revendications 1 à 3, **caractérisé en ce que** la deuxième section (9) est pliée coniquement par rapport au raccord de tuyau sur son côté intérieur tourné vers le raccord de tuyau (3) au moins dans la zone faisant suite à la saillie d'arrêt (5).

5. Raccordement de tuyaux selon l'une des revendications 1 à 4, **caractérisé en ce que** sont prévus des moyens pour fixer axialement et/ou de manière résistante à un déplacement angulaire le manchon d'arrêt (1) par rapport au raccord de tuyau (3).

6. Raccordement de tuyaux selon la revendication 5, **caractérisé en ce que** le cran d'arrêt (6) ne s'étend que sur une section du pourtour du bout de tuyau (7) et présente sensiblement la même largeur que la saillie d'arrêt (5) sur le manchon d'arrêt (1), laquelle traverse le raccord de tuyau (3).
and has substantially the same width as the detent projection (5) at the detent sleeve (1), which engages through the pipe connecting member (3).

7. Pipe connection according to one of claims 1 to 6, **characterised in that** a resilient element, preferably a spring element or rubber element, actuable on actuation of the second section (9) is provided for increasing the restoring force.

8. Pipe connection according to claim 7, **characterised in that** the resilient element is arranged at the pipe connecting member (3) in the region of the second section (9) or at the second section (9) itself to face the pipe connecting member (3).

9. Pipe connection according to one of claims 1 to 8, **characterised in that** the pipe piece (7) is constructed as a telescopic pipe or as a handgrip.

10. Pipe connection according to one of claims 1 to 9, **characterised in that** the detent sleeve (1) has recesses extending in axial direction.

11. Pipe connection according to claim 10, **characterised in that** the recesses go out not only from the pipe edge of the first section (2), but also from the pipe edge of the second section (9) of the detent sleeve (1).
